# FASCICULE DE BREVET EUROPEEN

(11) **EP 1 713 677 B1**
(45) Date de publication et mention de la délivrance du brevet: **07.10.2009**
(21) Numéro de dépôt: 05717531.7
(22) Date de dépôt: 01.02.2005
(51) Int. Cl.: B62D 1/26, E01B 25/28

(54) **GALET INCLINE DE GUIDAGE A UTILISER PAR PAIRE POUR UN ENSEMBLE DE GUIDAGE LE LONG D'UN RAIL**
GENEIGTE FÜHRUNGSROLLE ZUR VERWENDUNG IN EINEM PAAR FÜR EINE ANORDNUNG ZUM FÜHREN ENTLANG EINER SCHIENE
INCLINED GUIDE ROLLER TO BE USED IN A PAIR FOR AN ARRANGEMENT FOR GUIDING ALONG A RAIL

(30) Priorité: 09.02.2004 FR 0401236
(43) Date de publication de la demande: 25.10.2006
(73) Titulaire: LOHR INDUSTRIE, 67980 Hangenbieten (FR)
(72) Inventeur: ANDRE, Jean-Luc, F-67120 Molsheim (FR); MAUPU, Jean-Louis, F-94800 Villejuif (FR); GANTER, Didier, F-67640 Fegersheim (FR)
(74) Mandataire: Metz, Paul
(86) Numéro de dépôt international: PCT/FR2005/000219
(87) Numéro de publication internationale: WO 2005/085038

(56) Documents cités:
- FR-A- 2 780 739
- FR-A- 2 781 823

## Description

L'invention se rapporte à un galet incliné de guidage destiné à un ensemble de guidage à deux galets identiques inclinés en V se déplaçant le long d'un rail de guidage.

Le brevet FR 2 781 823 au nom du même déposant se rapporte à un couple de galets de guidage disposés en V, comportant les caractéristiques définies dans le préambule de la revendication 1.

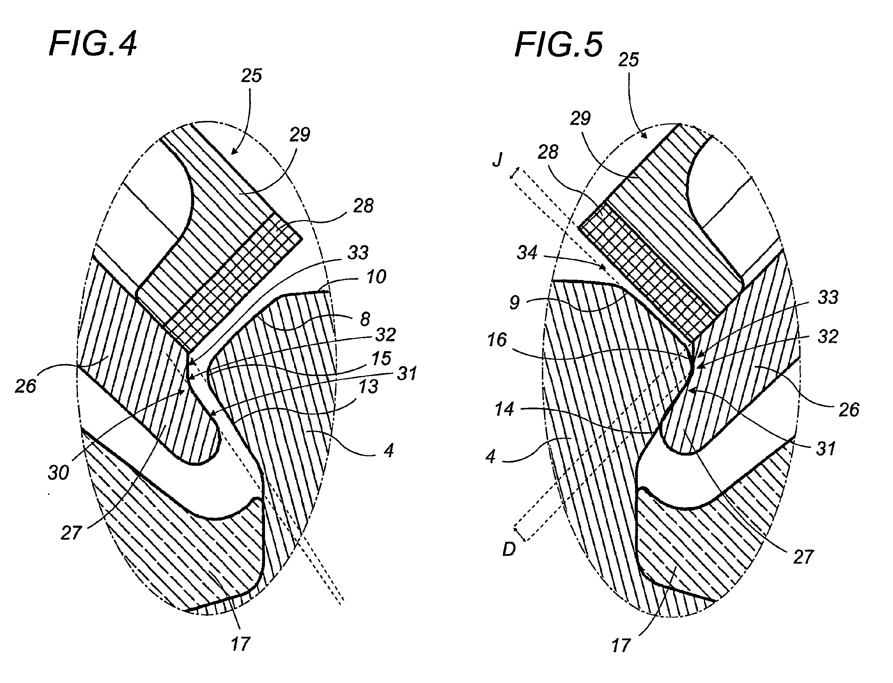

Certains des galets décrits sont du type classique dit à mentonnet (figure 4), c'est-à-dire comportant sur un côté un rebord périphérique droit saillant servant de butée transversale lors du roulage.

Le but de cette invention est de pouvoir extraire le couple de galets inclinés du rail par un mouvement vertical vers le haut au niveau de zones particulières présentant deux encoches opposées. Les encoches sont des évidements transversaux dans le rail diminuant localement la largeur du rail.

La fonction du mentonnet ne dépasse pas celle qu'il remplit habituellement, c'est-à-dire de servir de butée transversale.

Ces mentonnets représentent une augmentation périphérique de diamètre du galet. Ainsi, l'extraction par le haut n'est pas possible en-dehors des zones d'encoches en raison de la présence de ces mentonnets.

L'épaulement existant entre la force du mentonnet et la zone de roulement attenante du galet est l'angle habituel de changement de direction des surfaces successives. Il ne joue aucun rôle technique de remontée du galet en cas d'effort latéral.

Il importe pour un ensemble de guidage d'un véhicule routier par l'intermédiaire de galets roulant sur un rail de guidage, de se déplacer de façon stable et sans vibration avec le moins de bruit possible.

L'usure des galets doit être maîtrisée et ne nécessiter que des changements peu fréquents pouvant coïncider idéalement avec les visites techniques périodiques.

Par ailleurs, pour des raisons primordiales de sécurité, la conception de l'ensemble de guidage et les formes des galets et du rail de guidage doivent rendre minimale la tendance au déraillement et être conformés de façon à réduire et de préférence à compenser tout effort dont l'amplification aboutirait à une sortie du rail.

L'ensemble de guidage doit également se prêter de façon rapide et simple au remplacement périodique de ces pièces d'usure.

Cependant, des efforts exceptionnels s'exerçant sur les galets et/ou sur le bras de l'ensemble de guidage ne peuvent être exclus.

Par ailleurs, les surfaces de roulement des galets sont garnies d'un bandage de roulement généralement monté collé ou serré par ajustement de forme sur le pourtour de jante. Le bandage est réalisé en une matière souple du type caoutchouc ou analogue qui a pour fonction d'isoler phoniquement et électriquement le galet du rail et d'assurer un roulement souple.

Il apparaît ainsi la nécessité d'un arrangement ou d'un moyen de sécurité selon lequel dans le cas d'efforts latéraux exceptionnels sur le galet, le contact entre celui-ci et le rail se fera uniquement acier sur acier tout en préservant le bandage qui sert de surface de roulement au galet.

La présente invention a précisément ce but et répond au problème posé ci-dessus.

Pour ce faire, elle se rapporte à un galet de guidage, tel que défini dans la revendication 1, utilisé en couple avec un homologue en position inclinée à l'extrémité d'un bras de guidage. Le couple de galets roule sur le rail de guidage pour réaliser le guidage d'un véhicule routier.

Plus précisément, le galet de guidage est du type à mentonnet, c'est-à-dire présentant un rebord périphérique ou périmétrique de butée de roulement, ce rebord présentant du côté internes un décrochement par exemple un redan de manière à garantir un contact uniquement acier sur acier entre le galet et le rail lorsque s'exercent des efforts latéraux sur le galet ou sur le bras de guidage.

En évitant le contact du bandage de roulement du galet avec le rail dans le cas d'efforts latéraux, on évite la détérioration prématurée de ce bandage et on garantit une moindre usure de celui-ci.

D'autres caractéristiques et avantages de l'invention apparaîtront dans la description qui suit, donnée à titre d'exemple et accompagnée des dessins dans lesquels :

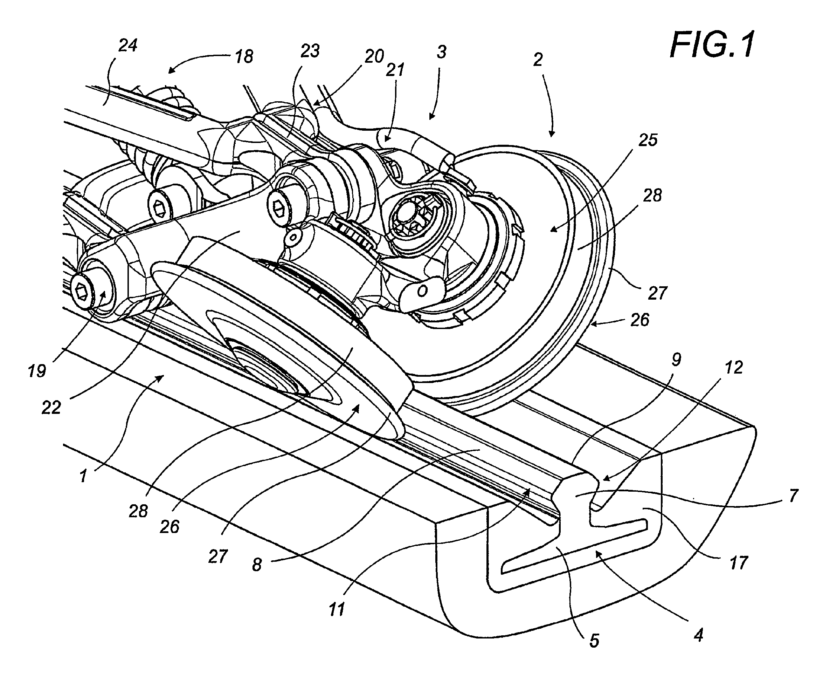

- la figure 1 est une vue en perspective d'un ensemble de guidage à deux galets inclinés en V roulant sur un rail de guidage,
- la figure 2 est une vue en coupe transversale médiane au niveau des galets de l'ensemble de guidage roulant sur un rail de guidage,
- la figure 3 est une vue en coupe transversale médiane au niveau des galets de l'ensemble de guidage en situation d'effort anormal se répercutant sur le galet de droite de cette figure,
- les figures 4 et 5 sont chacune des vues de détail en coupe à partir de la figure 3 montrant par des agrandissements, pour la figure 4, la forme du décrochement et pour la figure 5, le jeu garanti entre le rail et le bandage du galet lors d'efforts latéraux exceptionnels.

L'invention se rapporte à un galet incliné de guidage 1 ou 2 ainsi qu'au couple 1 et 2 de galets inclinés formant un ensemble de guidage et au rail de guidage adapté à ces galets.

Comme représenté, ces galets sont utilisés par deux en position inclinés en V dans un ensemble de guidage 3 pour rouler sur un rail 4 de guidage adapté à ceux-ci.

Ce rail 4 de guidage présente une semelle 5, une âme 6 et un champignon 7. Sur ce dernier sont conformées deux pistes inclinées planes ou légèrement bombées 8 ou 9 de roulement sur chacune desquelles roule respectivement un galet de guidage 1 ou 2. Le rail de guidage présente aussi une table supérieure 10 et de chaque côté un flanc en saillie 11 et 12 formé à chaque fois d'une rampe inclinée 13 ou 14 se poursuivant chacune par une des pistes de roulement correspondantes 8 ou 9 à la suite d'un bord arrondi 15 et 16 de transition.

Comme indiqué, la succession d'une piste de roulement, de son bord arrondi et de la rampe inclinée correspondante forme à chaque fois un des flancs 11 et 12 en saillie du rail 4 de guidage. Ces flancs en saillie sont les formes générales caractéristiques des rails de guidage susceptibles de convenir pour l'invention.

Le rail de guidage 4 est fixé au sol ou immobilisé dans une masse 17 de matière synthétique comme représenté sur les figures pour des raisons d'isolation électrique et phonique.

Les galets sont montés sur un ensemble de guidage dont un exemple celui de l'ensemble de guidage 3 est décrit ci-après. L'invention se montre assez indépendante du type d'ensemble de guidage portant les galets. Ainsi, la description d'un exemple de réalisation de celui-ci n'est que purement illustrative.

Il comporte de façon générale, un bras de guidage 18 articulé à au moins deux branches. Ce bras de guidage 18 est relié au système de commande de direction du véhicule. Le bras de guidage 18 présente une extrémité articulée réunissant un couple d'articulations inférieures de pivotement 19 et 20 autour d'un axe horizontal et une articulation supérieure de pivotement 21 autour d'un axe de pivotement horizontal supérieur à laquelle aboutissent d'une part deux bielles de liaison 22 et 23 provenant de la partie inférieure du bras 18 et d'autre part l'élément supérieur 24 du bras et sur laquelle sont articulés à rotation libre les deux galets inclinés 1 et 2 de guidage.

Bien entendu, le bras articulé de guidage et plus généralement l'ensemble de guidage 3 peut être réalisé d'une autre façon.

Chaque galet du couple de galets 1 et 2 de guidage est du type à mentonnet, c'est-à-dire présentant d'un côté de son corps un rebord périphérique en saillie destiné à servir de butée latérale de roulement et à empêcher ainsi un échappement accidentel des galets hors du rail.

On décrira maintenant en détail un des galets de guidage sachant que l'ensemble de guidage en comprend toujours deux identiques disposés de façon inclinée en V à pointe dirigée vers le bas.

Chaque galet de guidage est formé d'une jante 25 à chant de pourtour et d'un flasque 26. Ces deux parties sont jointives par assemblage et le flasque 26 est de diamètre supérieur à celui de la jante 25 si bien qu'il laisse apparaître un rebord périphérique 27 en saillie dépassant du chant de pourtour utilisé comme butée de roulement. Le chant de pourtour de la jante 25 est garni d'un bandage 28 utilisé comme bande de roulement. Le bandage 28 est généralement monté sur le chant de la jante par exemple par collage ou par ajustement serré ou d'une autre façon. Il est réalisé en une matière souple à faible bruit et est remplaçable sur la jante avec ou sans dépose de celle-ci.

La jante 25 est de préférence creuse. Son corps est formé d'une pièce 29 du type carter à face avant lisse et plane et réalisée en une matière flexible.

Afin de protéger le bandage 28, on souhaite que le contact entre le galet 1 ou 2 et le rail de guidage s'effectue acier sur acier dans le cas d'un effort latéral exceptionnel venant contraindre le galet en rapprochement du rail de guidage.

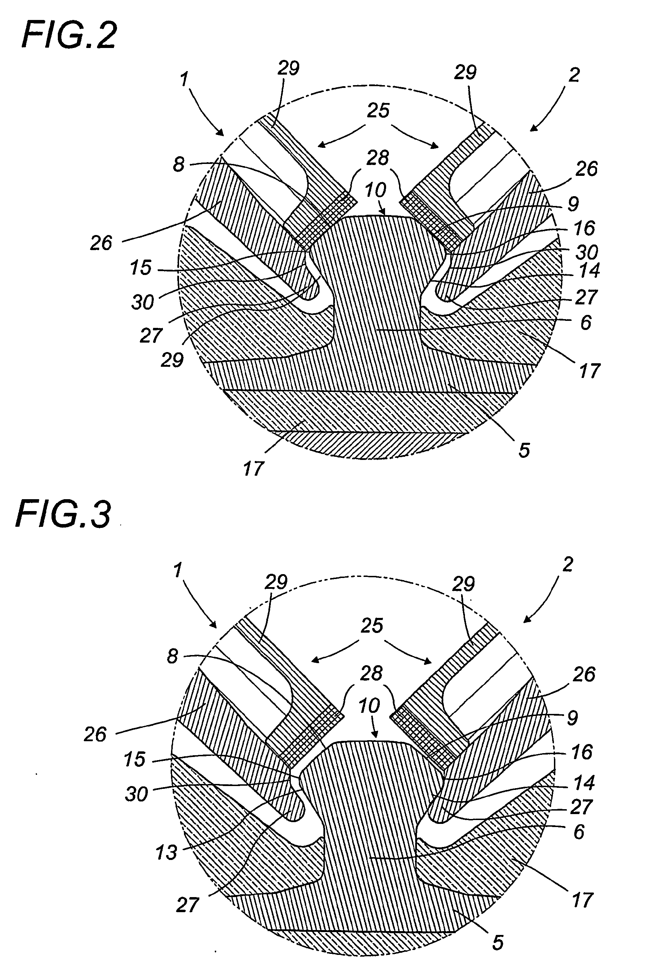

Pour ce faire, et comme illustré sur la figure 3 et les agrandissements des figures 4 et 5, le rebord périphérique 27 présente du côté du rail un décrochement 30 par exemple un redan pour réaliser un décalage d'épaisseur de la face intérieure du rebord par rapport à sa prolongation normale.

La représentation de ce décrochement 30 montre qu'il est formé successivement de la périphérie du galet vers son intérieur, d'une plage technique oblique 31 de pente montante par rapport à la face externe du flasque 26, suivie d'un léger arrondi concave 32 puis d'une rampe inclinée montante 33 (figures 4 et 5).

La pente montante de la plage technique oblique 31 est égale ou voisine à, ou plus importante que celle de la rampe inclinée 13 ou 14 en regard du rail.

Cette caractéristique est illustrée par les lignes légèrement convergentes en traits brisés sur la figure 4.

L'emplacement et la forme de ce décrochement 30 permettent lorsque s'exercent des efforts latéraux exceptionnels sur les galets et/ou sur l'ensemble de guidage d'une part au rebord périphérique 27 de venir porter par sa face intérieure sur la rampe inclinée en regard et son arrondi du rail de guidage 4 et d'autre part consécutivement de venir s'appuyer à calage sur l'arrondi 15 ou 16 et d'établir ainsi un jeu 34 référencé aussi J entre la surface extérieure de contact du bandage 28 et la piste de roulement correspondante 8 ou 9.

On évite ainsi par ce jeu J, dans le cas d'efforts latéraux exceptionnels, tout contact du bandage 28 avec la piste de roulement correspondante 8 ou 9. Le bandage se trouve ainsi protégé et préservé dans son intégrité pour empêcher sa détérioration ou sa destruction.

La vue de détail correspondant à la figure 5 montre plus particulièrement la position du galet en contact dans le cas d'un effort exceptionnel. On voit sur cette figure, que la plage technique oblique 31 du décrochement 30 vient en contact de butée latérale avec la rampe inclinée en regard 13 ou 14 du rail de guidage, que l'arrondi concave 32 du décrochement 30 vient se caler dans celui du rail, et que l'extrémité vers l'arrondi 32 de la rampe inclinée 33 du décrochement 30 fait office de butée de profondeur pour maintenir un jeu minimal J entre le rail et la face de contact du bandage. La surface de contact du bandage 28 est alors en l'air par rapport à la piste de roulement du rail en dessous 8 ou 9 et le début du bandage est venu s'éloigner d'un décalage D de l'arrondi 15 ou 16 du rail de guidage pour mieux garantir sa protection comme visualisé sur la figure 5 par deux lignes en traits brisés. Tout ceci en raison de l'inclinaison supplémentaire du galet forcé par les efforts latéraux exceptionnels.

On peut, en augmentant la pente de la plage technique oblique 31 par rapport à la face externe du flasque 26, augmenter ce jeu J ou 34 dont la forme devient celle d'une cale ou d'un coin plus important. Cette augmentation du jeu J s'avère possible en raison des débattements liés à des jeux fonctionnels existant entre les pièces au niveau de l'extrémité du bras de guidage et du montage des galets sur ce bras de guidage.

## Revendications

1. Galet de guidage du type à flasque (26) destiné à coopérer en position inclinée avec un rail (4) de guidage et présentant un rebord périphérique (27) en saillie et une jante (25) garnie d'un bandage de roulement (28), le rebord périphérique (27) en saillie étant conformé du côté intérieur du galet selon un décrochement (30) **caractérisé en ce que** le décrochement (30) que présente le rebord périphérique (27) en saillie du côté intérieur du galet (14) est formé successivement en partant de la périphérie vers la jante (25),
. d'une plage technique oblique (31) à pente égale à, ou montante par rapport à, la face externe du flasque (26) du galet, et se trouvant en utilisation en regard d'une rampe inclinée du flanc correspondant du rail de guidage,
. d'un arrondi concave (32) apte à coopérer avec l'arrondi (15) ou (16) du rail (4) de guidage, et
. d'une rampe inclinée montante (33) à plues forte inclinaison que celle de la plage technique oblique (31),
pour coopérer avec la conformation en regard du rail (4) de guidage dans le cas d'un effort latéral sur le galet (14) en cours de roulement, de façon que ce galet par la pression d'appui sur le rail résultant de l'effort latéral, quitte progressivement son contact de roulement sur sa piste de roulement (8) ou (9) jusqu'à ce que sa bande de roulement (28) se trouve maintenue à distance de la piste de roulement respective (8) ou (9) située en regard sur le rail (4) de guidage.

2. Galet selon la revendication 1
**caractérisé en ce que** le décrochement (30) est un redan.

3. Galet selon la revendication 1 ou 2 **caractérisé en ce que** la pente montante de la plage technique oblique (31) est égale ou voisine à celle de la rampe inclinée (13) ou (14) en regard du flanc correspondant du rail de guidage.

4. Galet selon la revendication 3 **caractérisé en ce que** la pente montante de la plage technique oblique (31) est plus importante que celle de la rampe inclinée (13) ou (14) en regard du flanc correspondant du rail de guidage.

5. Galet de guidage selon la revendication 1 **caractérisé en ce que** la jante (25) du galet garnie de la bande de roulement (28) est creuse et formée d'une pièce (29) extérieurement lisse et plate présentant des propriétés de souplesse.

6. Ensemble de guidage formé de deux galets selon l'une quelconque des revendications 1 à 5 utilisés en position inclinée en V à pointe dirigée vers le bas sur un rail de guidage.

7. Ensemble de guidage formé de deux galets selon l'une quelconque des revendications 1 à 5 utilisés en position inclinée en V à pointe dirigée vers le bas, en association avec un rail de guidage comportant une table plane supérieure (10) et deux flancs symétriques en saillie (11) et (12) revenant vers l'âme et qui se terminent vers le bas par une semelle (5), les flancs en saillie (11) et (12) étant formés chacun du bas vers le haut par une rampe inclinée (13) et (14) suivie d'un arrondi (15) et (16) pour se terminer chacun par une piste inclinée de roulement (8) et (9) se prolongeant latéralement par la table plane supérieure (10).

## Claims

1. Flange-type guidance roller (26) for cooperating in sloped position with a guide rail (4) and presenting a protruding peripheral ledge (27) and a wheel rim (25) with a rolling surface (28), the protruding peripheral ledge (27) being on the inner side of the roller like a detachment (30), **characterized in that** the detachment (30) of the protruding peripheral ledge (27) on the inner side of the roller (14) is formed successively, seen from the periphery towards the wheel rim (25),
- with an oblique technical surface (31) with the same slope as, or rising in comparison with, the external side of the wheel disc (26) of the roller, and which are, in use, opposite an inclined ramp of the corresponding side of the guidance rail,
- with a concave rounding (32) capable of cooperating with the rounding (15) or (16) of the guide rail (4), and,
- with a rising inclined ramp (33) with a stronger tilting than that of the oblique technical surface (31), to cooperate with the conformation opposite the rail (4) guide in the case of a side force on the roller (14) during rolling, so that this roller by the support pressure on the rail which results from the side force, leaves progressively its rolling contact on its rolling path (8) or (9) until its rolling surface (28) is maintained distanced from the respective rolling path (8) or (9) situated opposite on the rail (4) guide.

2. Roller according to claim 1 **characterized in that** the detachment (30) is a step.

3. Roller according to claim 1 or 2 **characterized in that** the rising slope of the oblique technical surface (31) is near or equal to that of the sloped ramp (13) or (14) opposite the corresponding side of the guide rail.

4. Roller according to claim 3 **characterized in that** the rising slope of the oblique technical surface (31) is more important than that of the sloped ramp (13) or (14) opposite the corresponding side of the guide rail.

5. Guide roller according to claim 1 **characterized in that** the wheel rim (25) of the roller equipped with the rolling surface (28) is hollow and formed by a piece (29) that is outwardly smooth and flat, showing flexibility properties.

6. Guide unit formed by two rollers according to any of the claims 1 to 5 used in sloped position V shaped with the tip downwards on a guide rail.

7. Guide unit formed by two rollers according to any of the claims 1 to 5, used in sloped position V shaped with the tip downwards, in association with a guide rail including an upper plane plate (10) and two symmetrical sides, which are protruding (11) and (12) reverting towards the core and which terminate downwards by a sole (5), the protruding sides (11) and (12) being formed each from bottom to top by a sloped ramp (13) and (14), followed by a rounding (15) and (16) and ending each by a sloped rolling path (8) and (9), prolonging laterally by the upper plane plate (10).

## Patentansprüche

1. Führungsrolle mit Flansch (26), die in geneigter Position mit einer Führungsschiene (4) zusammenwirkt und einen überstehenden Rand (27) und einen Radkranz (25) aufweist, ausgestattet mit einer Lauffläche (28), wobei der überstehende Rand (27) an der Innenseite der Rolle liegt, als Versatz (30), **gekennzeichnet dadurch, dass** der Versatz (30) des überstehenden Randes (27) der Innenseite der Rolle (14) daran anschließt, vom Umfang zum Radkranz (25) hin gesehen,
- mit einer schrägen technischen Fläche (31) mit dem gleichen Gefälle wie die Außenseite des Flanschs (26) der Rolle oder ansteigend im Vergleich zu dieser, die bei der Benutzung gegenüber einer geneigten Auflauffläche der entsprechenden Seite der Führungsschiene liegt,
- mit einer konkaver Rundung (32), die mit der Rundung (15) oder (16) der Führungsschiene (4) zusammenwirkt, und
- mit einer ansteigende Auflauffläche (33) mit stärkerer Neigung als die der schrägen technischen Fläche (31),
um mit der Form gegenüber der Führungsschiene (4) im Falle einer Seitenkraft auf die Rolle (14) während des Rollens zusammenzuwirken, so dass diese Rolle durch den Auflagedruck auf die Schiene als Ergebnis der Seitenkraft allmählich ihren Rollkontakt auf ihrer Rollbahn (8) oder (9) verlässt, bis ihre Lauffläche (28) von der jeweiligen Rollbahn (8) oder (9) die gegenüber auf der Führungsschiene (4) liegt, beabstandet ist.

2. Rolle nach Anspruch 1, **gekennzeichnet dadurch, dass** der Versatz (30) ein Absatz ist.

3. Rolle nach Anspruch 1 oder 2, **gekennzeichnet dadurch, dass** die Steigung der schrägen technische Fläche (31) gleich oder nahe der der geneigten Auflauffläche (13) oder (14) gegenüber der entsprechende Seite der Führungsschiene ist.

4. Rolle nach Anspruch 3, **gekennzeichnet dadurch, dass** die Steigung der schrägen technischen Fläche (31) größer als die der geneigten Auflauffläche (13) oder (14) gegenüber der entsprechenden Seite der Führungsschiene ist.

5. Führungsrolle nach Anspruch 1, **gekennzeichnet dadurch, dass** der Radkranz (25) der Rolle mit der Lauffläche (28) hohl und aus einem Stück gebildet ist, das außen glatt (29) und flach ist und Flexibilitätseigenschaften aufweist.

6. Führungseinheit, gebildet aus zwei Laufrollen, nach einem beliebigen der Patentansprüche 1 bis 5, in V-förmiger geneigter Position mit der Spitze nach unten auf einer Führungsschiene.

7. Führungseinheit, gebildet aus zwei Laufrollen, nach einem beliebigen der Patentansprüche 1 bis 5, in V-förmiger geneigter Position mit der Spitze nach unten, in Verbund mit einer Führungsschiene mit einer oberen ebenen Platte (10) und zwei symmetrischen Flanken, die überstehen, (11) und (12), und die zu dem Kern zurückkommen und nach unten in einer Sohle (5) enden, wobei die überstehenden Flanken (11) und (12) jeweils von unten nach oben durch eine geneigte Auflauffläche (13) und (14) gebildet sind, gefolgt von einer Rundung (15) und (16), um jeweils in einer geneigte Rollbahn (8) und (9) zu enden, die sich seitlich durch die obere ebene Platte (10) verlängert.
